# EUROPÄISCHE PATENTSCHRIFT

(11) **EP 4 069 614 B1**
(45) Veröffentlichungstag und Bekanntmachung des Hinweises auf die Patenterteilung: **26.06.2024**
(21) Anmeldenummer: 21724595.0
(22) Anmeldetag: 04.05.2021
(51) Int. Cl.: B65G 47/14, B65G 47/256, B67B 3/064

(54) **SCHWERPUNKTSORTIERER**
CENTER OF GRAVITY SORTING DEVICE
DISPOSITIF DE TRI PAR CENTRE DE GRAVITÉ

(30) Priorität: 27.05.2020 DE 102020114177
(43) Veröffentlichungstag der Anmeldung: 12.10.2022
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: RICK, Michael, 52064 Aachen (DE); FUHRMANN, Gerd, 52066 Aachen (DE)
(74) Vertreter: Kohlmann, Kai
(86) Internationale Anmeldenummer: PCT/EP2021/061635
(87) Internationale Veröffentlichungsnummer: WO 2021/239398

(56) Entgegenhaltungen:
- CN-A- 103 979 297
- CN-A- 104 444 252
- CN-U- 203 006 530
- US-A1- 2008 190 736

## Beschreibung

Die Erfindung betrifft eine Vorrichtung zum Sortieren und Transportieren von übereinstimmenden Objekten mit einer sich zwischen einer Boden- und Deckfläche erstreckenden Mantelfläche, deren Volumenschwerpunkt nicht mit deren Massenschwerpunkt zusammenfällt, umfassend einen
- Stetigförderer mit einem in einer stets gleichbleibenden Transportrichtung in einem Ober- und Untertrum umlaufenden Transportband, wobei der Obertrum des Transportbandes in Transportrichtung zunächst ein Beladeteil und anschließend ein nach oben förderndes Sortier- und Steilförderteil des Steigförderers (5) durchläuft und
- mehrere als Profilleisten ausgebildete Mitnehmer für die Objekte, die quer zur stets gleichbleibenden Transportrichtung an dem Transportband befestigt sind, wobei jede Profilleiste eine erste Auflagefläche und eine der ersten Auflagefläche gegenüberliegende zweite Auflagefläche aufweist, wobei die erste und zweite Auflagefläche jeweils eine sich in Längsrichtung der Profilleiste erstreckende Länge und eine sich querab dazu erstreckende unterschiedliche Breite aufweisen.

Derartige Vorrichtungen, auch als Schwerpunktsortierer bezeichnet, sind aus dem Stand der Technik, beispielsweise der EP 1 814 811 B1, bekannt. Schwerpunktsortierer werden für das Sortieren von übereinstimmenden Objekten verwendet, deren Volumenschwerpunkt nicht mit deren Massenschwerpunkt zusammenfällt, wie beispielsweise Behälterverschlüsse, die eine flache Form als Deckel oder eine tiefe Form wie beispielsweise Schraubverschlüsse aufweisen können. Unabhängig von der Art des Behälterverschlusses muss dieser in einer Getränkeabfüllanlage einer Verschließvorrichtung in einer einheitlichen Orientierung, das heißt mit stets gleicher Ausrichtung der Bodenfläche des Behälterverschlusses zugeführt werden.

Damit sichergestellt ist, dass die Behälterverschlüsse stets mit der vorgesehenen, korrekten Orientierung zu der Verschließvorrichtung gelangen, werden fehlerhaft orientierte Behälterverschlüsse mit dem Schwerpunktsortierer aussortiert. Zu diesem Zweck weist der Schwerpunktsortierer einen Bandförderer mit einem waagerechten beziehungsweise gegenüber der Horizontalen lediglich gering geneigten Beladeteil und einen unter einem Winkel von etwa 70 bis 90 Grad gegenüber der Horizontalen geneigten Sortier- und Steilförderteil auf. An dem umlaufenden Transportband sind in regelmäßigen Abständen und quer zur Transportrichtung als Leisten ausgebildete Mitnehmer angeordnet, deren Abstände voneinander größer sind als die größten Durchmesser der zu sortierenden Behälterverschlüsse.

Die Höhe der Mitnehmerleisten beziehungsweise die Breite der Auflageflächen ist an die Form der Behälterverschlüsse derart angepasst, dass die Breite der Auflagefläche jeder Mitnehmerleiste etwas größer als der Abstand des Massenschwerpunkts der korrekt orientierten Behälterverschlüsse zu der Oberfläche des Transportbandes ist. Die fehlerhaft orientierten Behälterverschlüsse, also diejenigen deren Boden von der Oberfläche des Transportbandes abgewandt liegen fallen in dem Sortier- und Steilförderteil des Stetigförderers von den Mitnehmerleisten herab und gelangen zurück in den Beladeteil.

In Transportrichtung hinter dem Sortier- und Steilförderteil ist eine Ausleitvorrichtung für die sortierten und korrekt orientierten Behälterverschlüsse vorgesehen. Das Ausleiten kann beispielsweise pneumatisch querab zur Transportrichtung erfolgen.

Bei den bekannten Schwerpunktsortierern muss zur Anpassung der Mitnehmerleisten an unterschiedliche Typen von Behälterverschlüssen das Transportband des Stetigförderers durch ein anderes Transportband mit abweichend gestalteten Mitnehmerleisten ausgetauscht werden. Alternativ ist es bekannt die an dem Transportband befestigten Mitnehmerleisten sämtlich gegen andere Mitnehmerleisten auszutauschen, was mit hohem Zeitaufwand verbunden und daher kostenaufwendig ist. Im erstgenannten Fall muss stets ein Wechselteil in Form eines weiteren Transportbandes vorgehalten werden.

Aus der DE 10 2004 030 667 B4 ist ein Schwerpunktsortierer bekannt, der eine einfache und rasche Umstellung der Mitnehmer auf eine der Geometrie der Behälterverschlüsse angepasste Mitnehmer ermöglichen soll. Zur Lösung wird ein Schwerpunktsortierer, beispielweise mit einem Bandförderer vorgeschlagen, der mit Förderelementen ausgestattet ist, die im rechten Winkel zur Transportrichtung des Bandförderers ausgerichtet sind. Die Förderelemente tragen Mitnehmer, die an die zu sortierenden Behälterverschlüsse angepasst sind. Die Förderelemente sind als T-Profile ausgebildet und ermöglichen die Montage der unterschiedlichen Mitnehmer durch einfaches seitliches Aufschieben auf die T-Profile und durch Befestigung mit mehreren Verschraubungen von der Vorderseite. Eine Anpassung der Mitnehmer an die Geometrie der Behälterverschlüsse ist bei dieser Lösung ebenfalls zeitaufwendig, da jeder einzelne Mitnehmer demontiert und durch einen anderen Mitnehmer ersetzt werden muss.

Aus der US 9,376,301 B1 ist ferner ein Schwerpunktsortierer bekannt, der eine Anpassung des Abstands der quer zur Transportrichtung montierten Mitnehmer zueinander erlaubt. Das Transportband ist zu diesem Zweck in zwei benachbarte Bänder geteilt, wobei die Mitnehmer abwechselnd an dem einen und dem anderen Band befestigt sind. Durch eine Relativbewegung zwischen den beiden Bändern lassen sich die Abstände zweier aufeinanderfolgender Mitnehmer verändern, sodass in jeden zweiten Zwischenraum zwischen den Mitnehmern ein Verschlusselement mit einem bestimmten Durchmesser passt.

Die DE 10 2009 033 323 A1 offenbart eine Vorrichtung zum Sortieren und Transportieren von übereinstimmenden Push-pull-Verschlüssen, deren Volumenschwerpunkt nicht mit deren Massenschwerpunkt zusammenfällt. Die Vorrichtung umfasst einen als Kettenförderer ausgestalteten Linearförderer, der in Transportrichtung zunächst ein Beladeteil und anschließend ein nach oben förderndes Sortier- und Steilförderteil durchläuft. An beiderseitigen Ketten des Ketteförderers sind Förderelemente befestigt, an welchen Mitnehmerleisten angebracht sind. In die Leisten sind Ausnehmungen eingearbeitet, die an die Konturen der zu sortierenden Pushpull-Verschlüsse angepasst sind.

Die US 2008/190736 A1 offenbart eine gattungsgemäße Vorrichtung zum Sortieren und Transportieren von Kappen, deren Volumenschwerpunkt nicht mit deren Massenschwerpunkt zusammenfällt. Die Vorrichtung weist einen Stetigförderer mit einem in einer stets gleichbleibenden Transportrichtung umlaufenden Förderband auf, dass sich aus zahlreichen Gelenkabschnitten zusammensetzt. Der Obertrum des Förderbandes durchläuft in der Transportrichtung zunächst ein im Wesentlichen horizontalen Abschnitt und anschließend einen im Wesentlichen vertikalen Abschnitt. An dem Förderband sind mehrere Profilleisten quer zur Transportrichtung lösbar befestigt, wobei jede Profilleiste eine Arbeitsfläche und eine dieser gegenüberliegende Nicht-Arbeitsfläche aufweist. Die Arbeitsfläche ist definiert als diejenige Fläche, die während des Betriebs die Kappen unterstützt und fördert, wenn die Kappen aus dem Bunker der Vorrichtung zur Spitze des Kappenförderers transportiert werden. Die Profilleisten sind lösbar an dem Förderband befestigt. Hierzu sind an dem Förderband knopfartige Mittel mit T-förmigen Querschnitt angeordnet, die in entsprechende Schlitze eingreifen, die in die Profilleisten eingelassen sind. Die Schlitze sind über in der Nicht-Arbeitsfläche angeordnete Öffnungen zugänglich.

Ausgehend von dem Stand der Technik liegt der Erfindung die Aufgabe zugrunde, eine Anpassung der Mitnehmer an unterschiedliche Geometrien der Objekte, insbesondere Behälterverschlüsse, zu ermöglichen, ohne dass ein Auswechseln der Mitnehmer erforderlich ist oder ein weiteres Transportband vorgehalten werden muss.

Diese Aufgabe wird bei einer Vorrichtung der eingangs erwähnten Art dadurch gelöst, dass
- das Transportband wahlweise in einer ersten oder zweiten Laufrichtung in dem Stetigförderer derart verwendbar ist, dass in der ersten Laufrichtung des Transportbandes die erste Auflagefläche und in der zweiten Laufrichtung des Transportbandes die zweite Auflagefläche die in der stets gleichbleibenden Transportrichtung vordere Auflagefläche ist,
- die Breite der in Transportrichtung wahlweise vorderen ersten und zweiten Auflagefläche derart auf die Objekte abgestimmt ist, dass in dem Beladeteil auf der jeweils in der stets gleichbleibenden Transportrichtung vorderen Auflagefläche jeder Profilleiste Objekte mit korrekter und fehlerhafter Orientierung mit der Mantelfläche aufliegend aufgenommen werden, wobei der Abstand zwischen dem Massenschwerpunkt jedes Objekts mit korrekter Orientierung und dem Transportband geringer ist als der Abstand zwischen dem Massenschwerpunkt jedes Objekts mit fehlerhafter Orientierung und dem Transportband und in dem sich anschließenden Sortier- und Steilförderteil die Objekte mit fehlerhafter Orientierung aufgrund des größeren Abstandes des Massenschwerpunkt von der Auflagefläche herabfallen.

Für mindestens zwei Objekttypen, beispielsweise Behälterverschlüsse mit unterschiedlichen Durchmessern von 26 mm und 32 mm und unterschiedlicher Lage des Massenschwerpunktes, muss kein Wechselteil in Form eines weiteren Transportbandes vorgehalten werden. Es ist lediglich erforderlich das Transportband zu demontieren und in der entgegengesetzten Laufrichtung auf den Stetigförderer aufzuziehen. In der ersten Laufrichtung des Transportbandes ist die erste Auflagefläche und in der zweiten Laufrichtung des Transportbandes die zweite Auflagefläche die jeweils fordere Auflagefläche. Bei stets gleichbleibender Transportrichtung nehmen jeweils lediglich die in Transportrichtung vorderen Auflageflächen die Objekte auf. Durch die unterschiedliche Breite der ersten und zweiten Auflagefläche wird erfindungsgemäß die erforderliche Anpassung an die verschiedenen Objekttypen vorgenommen.

Die Breite der in der stets gleichbleibenden Transportrichtung wahlweise vorderen ersten und zweiten Auflagefläche ist derart auf die Objekte des ersten und zweiten Objekttyps abgestimmt, dass in dem Beladeteil auf der jeweils in Transportrichtung vorderen Auflagefläche jeder Profilleiste Objekte mit korrekter und fehlerhafter Orientierung mit der Mantelfläche aufliegend aufgenommen werden, wobei der Abstand zwischen dem Massenschwerpunkt jedes Objektes mit korrekter Orientierung und dem Transportband geringer ist, als der Abstand zwischen dem Massenschwerpunkt jedes Objektes mit fehlerhafter Orientierung und dem Transportband. In dem sich anschließenden Sortier- und Steilförderteil fallen die Objekte mit fehlerhafter Orientierung aufgrund des größeren Abstands des Massenschwerpunkts herab.

Der Abstand zwischen den Profilleisten in Transportrichtung ist etwas größer als der größere Durchmesser der beiden Objekttypen. Vorzugsweise wird der Abstand derart bestimmt, dass die jeweils in Transportrichtung vordere Auflagefläche jeder Profilleiste die Objekte beider Objekttypen nur einreihig aufnehmen kann. Übersteigt der Abstand das 1,86-fache des Durchmessers eines Objekttyps besteht die Gefahr, dass die Objekte zwischen zwei benachbarten Profilleisten in zwei Reihen aufgenommen werden und in Folge dessen die Objekte mit fehlerhafter Orientierung nicht ordnungsgemäß aussortiert werden können.

Das Transportband ist im Obertrum des Sortier- und Steilförderteils gegenüber der Horizontalen in einem Winkel von 70 - 90 ° geneigt, um ein zuverlässiges Aussortieren der fehlerhaft orientierten Objekte zu gewährleisten.

Die Neigung des Transportbandes im Obertrum ist zumindest in einem Abschnitt des Sortier- und Steilförderteils vorzugsweise einstellbar. In dem einstellbaren Abschnitt ist die Steigung des Transportbandes steiler als in den übrigen Abschnitten des Sortier- und Steilförderteils. Dadurch wird insbesondere die Stabilität der auf den Mitnehmern aufliegenden fehlerhaft orientierten Objekte reduziert. Durch die gezielte Einstellung der Steigung lässt sich dadurch das Sortierergebnis verbessern. Die Einstellung der Neigung des Transportbandes lediglich in einem Abschnitt des Sortier- und Steilförderteils des Transportbandes hat den Vorteil, dass diese technisch einfacher zu realisieren ist, als die Neigung des Transportbandes in dem gesamten Sortier- und Steilförderteil zu ändern. Außerdem kann durch gezielte Einstellung der Neigung erreicht werden, dass sich mit nur einem Transportband nicht nur zwei Objekttypen sortieren lassen, sondern darüber hinaus weitere Objekttypen, die gegenüber dem ersten und zweiten Objekttyp geringfügig abweichende Abmessungen und/oder geringfügig abweichende Abstände des Massenschwerpunkts aufweisen.

In vorteilhafter Ausgestaltung der Erfindung ist das Transportband wahlweise ein Gurtband, ein Riemen oder ein Gliederband, insbesondere eine Gliederbandkette, wobei die Oberfläche der vorgenannten Transportbänder derart eingerichtet ist, dass die Deck- oder Bodenfläche jedes zu sortierenden Objekts zumindest in dem Sortier- und Steilförderbereich an der Oberfläche des Transportbandes anliegt.

Um das Ausbauen und Aufziehen des Transportbandes in der jeweils entgegengesetzten Laufrichtung zu erleichtern, weist das Transportband in vorteilhafter Ausgestaltung der Erfindung ein Verschlusselement zum Öffnen und Verschließen des Transportbandes auf. Mittels des Verschlusselementes lässt sich das Transportband quer zur Transportrichtung öffnen und dadurch einfach von der Antriebstation, der Umlenkstation sowie den dazwischen angeordneten Führungselementen abheben und in entgegengesetzter Laufrichtung aufziehen.

Die Profilleisten weisen über ihre gesamte Längserstreckung einen gleichbleibenden Querschnitt auf. Die erste und zweite Auflagefläche erstrecken sich in Längsrichtung der Profilleiste vorzugsweise über deren gesamte Länge und weisen eine unterschiedliche Breite auf. An der dem Transportband zugewandten Seite sind die erste und zweite Auflagefläche jeder Profilleiste durch eine vorzugsweise ebene Fläche miteinander verbunden. An der der ebenen Fläche gegenüberliegenden Seite sind die erste und zweite Auflagefläche durch eine Übergangsfläche miteinander verbunden, die aufgrund ihrer Geometrie ein Aufliegen von Objekten verhindert. Hierdurch wird bewirkt, dass die Objekte ausschließlich durch die erste oder zweite Auflagefläche jeder Profilleiste aufgenommen und transportiert werden. Eine Aufnahme von Objekten mit der ebenfalls in dem Beladeteil mit den Objekten in Kontakt kommenden Übergangsfläche ist indes ausgeschlossen. Für die Ausbildung der Übergangsfläche kommen unterschiedliche Geometrien in Betracht. Beispielsweise kann die Übergangsfläche zumindest entlang der Kante der weniger breiten Auflagefläche als Fase, als Mulde oder beispielsweise als rechteckiger Einschnitt ausgebildet sein. Vorzugsweise geht die Fase, Mulde oder der Einschnitt in eine ebene Fläche über, die rechtwinklig zu der ersten und zweiten Auflagefläche ist. Die Fase, Mulde oder der Einschnitt bilden zusammen mit dieser ebenen Fläche die Übergangsfläche.

In einer weiteren Ausgestaltung der Erfindung kann die Übergangsfläche als Überhöhung der Profilleiste ausgebildet sein. Die Überhöhung bewirkt eine effektivere Durchmischung der Objekte in dem Beladeteil des Stetigförderers und kann die Anzahl der von dem Stetigförderer im Beladeteil aufgenommenen Objekte erhöhen. Die Überhöhung lässt sich beispielweise dadurch realisieren, dass die Übergangsfläche nicht nur entlang der Kante der weniger breiten Auflagefläche, sondern auch entlang der breiteren Auflagefläche als Fase, Mulde oder Einschnitt ausgebildet ist.

Aus fertigungstechnischen Gründen kann es vorteilhaft sein, wenn jede Profilleiste aus mehreren, vorzugsweise zwei Teilen zusammengesetzt ist. Die beiden jeweils eine Profilleiste bildenden Teile können einzeln an dem Transportband befestigt sein. Alternativ ist es möglich, lediglich eines der Teile jeder Profilleiste an dem Transportband zu befestigen und die beiden Teile jeder Profilleiste miteinander zu verbinden.

Nachfolgend wird die Erfindung anhand der Figuren näher erläutert. Es zeigen
- **Figur 1**: eine schematische Seitenansicht einer erfindungsgemäßen Vorrichtung zum Sortieren und Transportieren von Verschlusselementen,
- **Figur 2**: eine schematische perspektivische Ansicht der Vorrichtung nach Figur 1 sowie
- **Figur 3**: eine vergrößerte Darstellung eines Abschnitts des Transportbandes mit daran befestigten Mitnehmern.

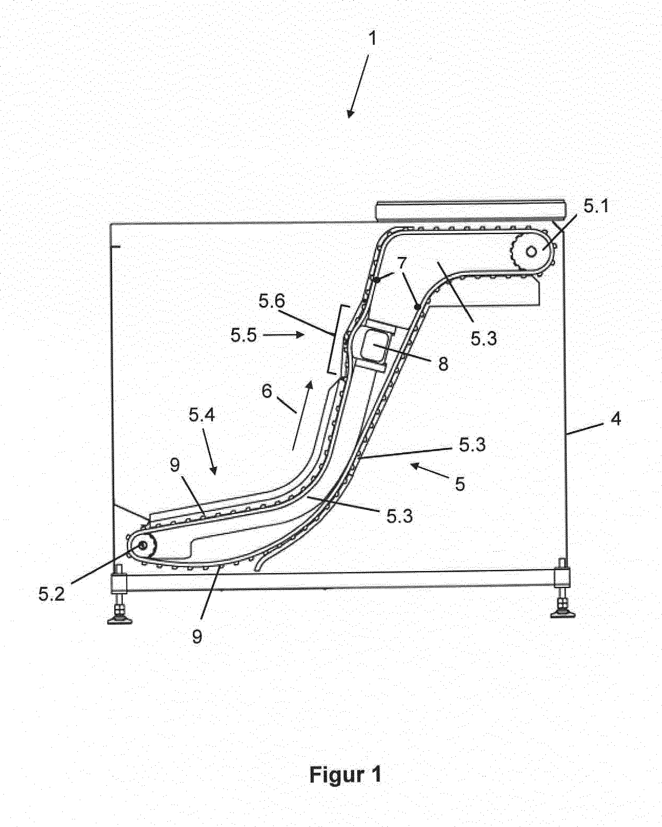

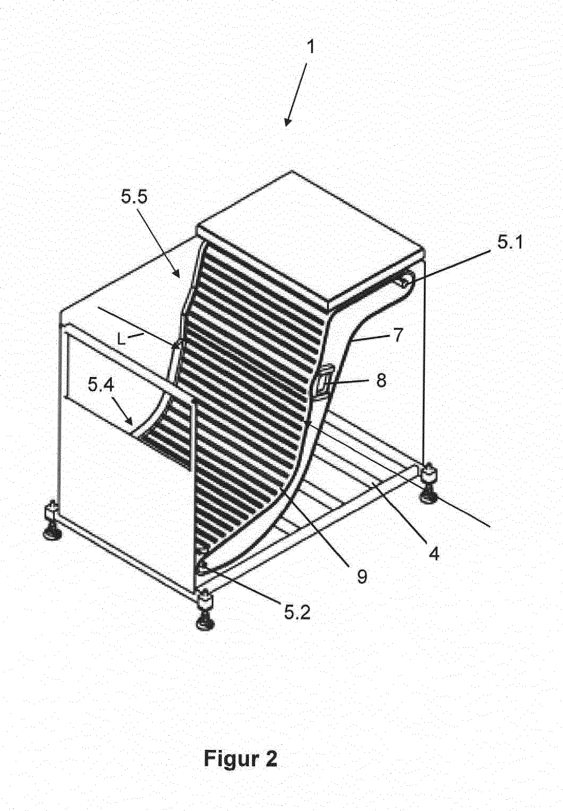

Figuren 1 und 2 zeigen eine Vorrichtung (1) zum Sortieren und Transportieren von übereinstimmenden Objekten (2), im dargestellten Ausführungsbeispiel von Behälterverschlüssen (3) mit einer sich zwischen einer Bodenfläche (3.1) und offenen Deckfläche (3.2) erstreckenden Mantelfläche (3.3).

Aufgrund der offenen Deckfläche (3.2) fällt der Massenschwerpunkt (3.4) nicht mit dem Volumenschwerpunkt des Behälterverschlusses (3) zusammen.

Die Vorrichtung (1) weist ein Gestell (4) als Tragkonstruktion für einen Stetigförderer (5) auf. Der Stetigförderer (5) umfasst eine Antriebstation (5.1), eine Umlenkstation (5.2) sowie Führungselemente (5.3) für ein Transportband (7), das zwischen der Antriebstation (5.1) und der Umlenkstation (5.2) stets in derselben Transportrichtung (6) umläuft. Das Transportband (7) ist beispielsweise als Gliederband ausgebildet, deren Platten mit Gelenken zu einem endlosen Gliederband verknüpft sind.

Die Führungselemente (5.3) führen den Obertrum des Transportbandes (7) in einem Beladeteil (5.4) der Vorrichtung mit einem gegenüber der Horizontalen lediglich geringem Neigungswinkel von etwa 10 Grad und in dem sich anschließenden Sortier- und Steilförderteil (5.5) mit einem Neigungswinkel von etwa 70 Grad gegenüber der Horizontalen. In Transportrichtung (6) hinter dem Sortier- und Steilförderteil (5.5) ist eine in den Figuren nicht dargestellte Ausleiteinrichtung für die Behälterverschlüsse (3) angeordnet. Die Ausleitvorrichtung kann beispielsweise mit Druckluft arbeiten, die querab zur Transportrichtung (6) auf die korrekt orientierten Behälterverschlüsse (3) einwirkt. In dem Untertrum wird das Transportband (7) von der Antriebstation (5.1) in Richtung der Umlenkstation (5.2) zurückgeführt.

In dem Sortier- und Steilförderteil (5.5) ist an der Rückseite des Transportbandes (7) ein Einstellmechanismus (8) angeordnet, mit dem die Neigung des Transportbandes (7) in einem Abschnitt (5.6) abweichend zu der übrigen Neigung des Sortier- und Steilförderteils (5.5) einstellbar ist. Mittels des Einstellmechanismus (8) ist eine lokale Auslenkung des Transportbandes (7) möglich, um die Steigung in diesem Abschnitt noch steiler einzustellen, als in dem übrigen Sortier- und Steilförderteil (5.5).

Auf der nach außen weisenden Oberfläche des Transportbandes (7) sind in gleichmäßigem Abstand als Profilleisten (9) ausgebildete Mitnehmer für die Behälterverschlüsse (3) quer zur Transportrichtung (6) befestigt. Jede Profilleiste (9) weist eine erste, ebene Auflagefläche (9.1) und eine der ersten Auflagefläche (9.1) gegenüberliegende zweite ebene Auflagefläche (9.2) auf. Die erste und zweite Auflagefläche (9.1, 9.2) erstrecken sich in Längsrichtung der Profilleiste (9) mit einer Länge L und einer sich querab zur Länge L erstreckenden unterschiedlichen Breite B1, B2. Die erste Auflagefläche (9.1) weist eine gegenüber der zweiten Auflagefläche (9.2) größere Breite B1 auf. Die erste und zweite Auflagefläche (9.1, 9.2) sind an der dem Transportband (7) zugewandten Seite durch eine ebene Fläche (9.3) und an der gegenüberliegenden Seite durch eine Übergangsfläche (9.4) miteinander verbunden. Die Übergangsfläche (9.4) ist geometrisch derart beschaffen, dass ein Aufliegen von Behälterverschlüssen (3) auf dieser Fläche verhindert wird. In dem dargestellten Ausführungsbeispiel ist die Übergangsfläche (9.4) entlang der Kante (9.5) der zweiten Auflagefläche (9.2) mit geringerer Breite B2 als Fase (9.6) ausgebildet. Der ebene Teil (9.7) der Übergangsfläche (9.4) ist parallel zu der ebenen rückwärtigen Fläche (9.3) und die erste und zweite Auflagefläche (9.1, 9.2) sind ebenfalls parallel zueinander angeordnet.

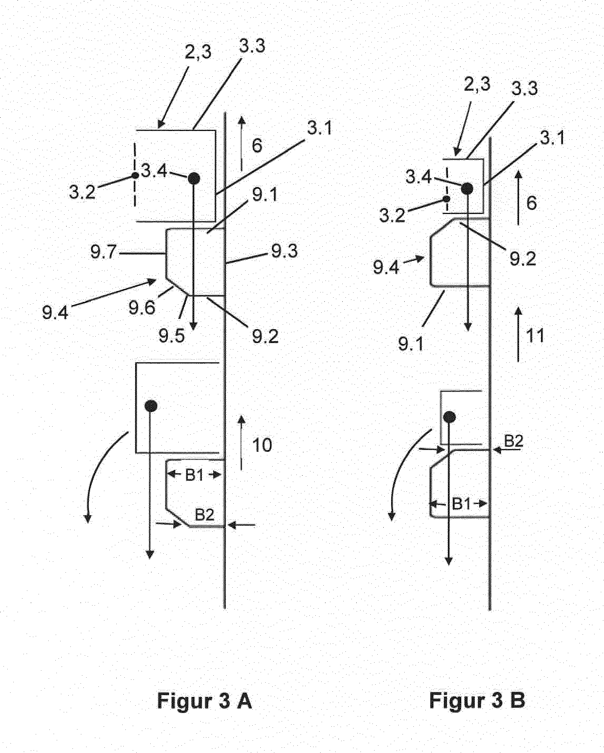

Das Transportband (7) kann wahlweise in einer ersten, in Figur 3A dargestellten Laufrichtung (10) oder in einer zweiten, in Figur 3B dargestellten Laufrichtung (11) auf den Stetigförderer (5) aufgezogen werden, wobei die Transportrichtung (6) stets beibehalten wird. In der ersten Laufrichtung (10) des Transportbandes (7) ist die erste Auflagefläche (9.1) mit der größeren Breite B1 die in Transportrichtung (6) vordere Auflagefläche, während in der zweiten Laufrichtung (11) die zweite Auflagefläche (9.2) mit der geringeren Breite B2 die in Transportrichtung (6) vordere Auflagefläche ist.

Die Breite B1, B2 der in der stets gleichbleibenden Transportrichtung (6) wahlweise vorderen ersten und zweiten Auflagefläche(9.1, 9.2) ist auf zwei Typen von Behälterverschlüssen (3) mit unterschiedlichen Abmessungen und unterschiedlicher Lage des Massenschwerpunktes (3.4) abgestimmt. In dem Beladeteil (5.4) werden auf der in Transportrichtung vorderen Auflagefläche (9.1, 9.2) jeder Profilleiste (9) Behälterverschlüsse (3) mit korrekter und fehlerhafter Orientierung mit der Mantelfläche (3.3) aufliegend aufgenommen, wobei in der ersten Laufrichtung (10) Behälterverschlüsse des ersten Typs und in der zweiten Laufrichtung (11) Behälterverschlüsse des zweiten Typs aufgenommen werden. Der Abstand zwischen dem Massenschwerpunkt (3.4) jedes Behälterverschlusses (3) mit korrekter Orientierung und dem Transportband (7) ist geringer, als der Abstand zwischen dem Massenschwerpunkt (3.4) jedes Behälterverschlusses (3) mit fehlerhafter Orientierung und dem Transportband (7).

In dem sich anschließenden Sortier- und Steilförderteil (5.5) des Stetigförderers (5) fallen jeweils die Behälterverschlüsse des ersten bzw. zweiten Typs mit fehlerhafter Orientierung aufgrund des größeren Abstandes des Massenschwerpunktes (3.4) von der in Transportrichtung (6) jeweils vorderen Auflagefläche (9.1, 9.2) herab.

Durch eine einfache Wendeoperation des Transportbandes (7) lässt sich wahlweise die breitere oder schmalere Auflagefläche (9.1, 9.2) ohne Demontage einzelner Leisten oder das Vorhalten eines zusätzlichen Transportbandes als wirksame, in Transportrichtung vordere Auflagefläche verwenden.

Um das Sortierergebnis zu verbessern, kann in dem Sortier- und Steilförderteil (5.5) die Neigung des Transportbandes (7) in dem Abschnitt (5.6) mit dem lokal das Transportband auslenkenden Einstellmechanismus (8) vergrößert werden. Hierdurch wird die Stabilität der fehlerhaft orientierten Behälterverschlüsse (3) weiter reduziert und dadurch das Sortierergebnis verbessert.

Die Auflageflächen (9.1, 9.2) können für die Sortierung von Behälterverschlüssen, beispielweise mit einer von einem Kreiszylinder abweichenden Geometrie, Hinterschneidungen aufweisen, die Teile der Behälterverschlüsse aufnehmen können.

### Bezugszeichenliste

| **Nr.** | **Bezeichnung** |
|---|---|
| 1 | Vorrichtung |
| 2 | Objekte |
| 3 | Behälterverschluss |
| 3.1 | Bodenfläche |
| 3.2 | Deckfläche |
| 3.3 | Mantelfläche |
| 3.4 | Massenschwerpunkt |
| 4. | Gestell |
| 5. | Stetigförderer |
| 5.1 | Antriebstation |
| 5.2 | Umlenkstation |
| 5.3 | Führungselemente |
| 5.4 | Beladeteil |
| 5.5 | Sortier- und Steilförderteil |
| 5.6 | Abschnitt |
| 6 | Transportrichtung |
| 7 | Transportband |
| 8 | Einstellmechanismus |
| 9 | Profilleiste |
| 9.1 | erste Auflagefläche |
| 9.2 | zweite Auflagefläche |
| 9.3 | ebene Fläche |
| 9.4 | Übergangsfläche |
| 9.5 | Kante |
| 9.6 | Fase |
| 9.7 | ebener Teil |
| 10 | erste Laufrichtung |
| 11 | zweite Laufrichtung |

## Patentansprüche

1. Vorrichtung (1) zum Sortieren und Transportieren von übereinstimmenden Objekten (2,3) mit einer sich zwischen einer Boden- und Deckfläche (3.1, 3.2) erstreckenden Mantelfläche (3.3), deren Volumenschwerpunkt nicht mit deren Massenschwerpunkt (3.4) zusammenfällt, umfassend
- einen Stetigförderer (5) mit einem in einer stets gleichbleibenden Transportrichtung (6) in einem Ober- und Untertrum umlaufenden Transportband (7), wobei der Obertrum des Transportbandes (7) in der stets gleichbleibenden Transportrichtung (6) zunächst ein Beladeteil (5.4) und anschließend ein nach oben förderndes Sortier- und Steilförderteil (5.5) des Steigförderers (5) durchläuft,
- mehrere als Profilleisten (9) ausgebildete Mitnehmer für die Objekte (2,3), die quer zur stets gleichbleibenden Transportrichtung (6) an dem Transportband (7) befestigt sind, wobei
- jede Profilleiste (9) eine erste Auflagefläche (9.1) und eine der ersten Auflagefläche (9.1) gegenüberliegende zweite Auflagefläche (9.2) aufweist, wobei die erste und zweite Auflagefläche (9.1, 9.2) jeweils eine sich in Längsrichtung der Profilleiste (9) erstreckende Länge (L) und eine sich querab dazu erstreckende unterschiedliche Breite (B1, B2) aufweisen, **dadurch gekennzeichnet, dass**
- das Transportband (7) wahlweise in einer ersten oder zweiten Laufrichtung (10,11) in dem Stetigförderer (5) derart verwendbar ist, dass in der ersten Laufrichtung (10) des Transportbandes die erste Auflagefläche (9.1) und in der zweiten Laufrichtung (11) des Transportbandes (7) die zweite Auflagefläche (9.2) die in der stets gleichbleibenden Transportrichtung (6) vordere Auflagefläche ist,
- die Breite (B1,B2) der in der stets gleichbleibenden Transportrichtung (6) wahlweise vorderen ersten und zweiten Auflagefläche (9.1,9.2) derart auf die Objekte (2,3) abgestimmt ist, dass in dem Beladeteil (5.4) auf der jeweils in der stets gleichbleibenden Transportrichtung (6) vorderen Auflagefläche (9.1,9.2) jeder Profilleiste (9) Objekte (2,3) mit korrekter und fehlerhafter Orientierung mit der Mantelfläche (3.3) aufliegend aufgenommen werden, wobei der Abstand zwischen dem Massenschwerpunkt (3.4) jedes Objekts (2,3) mit korrekter Orientierung und dem Transportband (7) geringer ist als der Abstand zwischen dem Massenschwerpunkt (3.4) jedes Objekts (2,3) mit fehlerhafter Orientierung und dem Transportband (7) und in dem sich anschließenden Sortier- und Steilförderteil (5.5) die Objekte (2,3) mit fehlerhafter Orientierung aufgrund des größeren Abstandes des Massenschwerpunkt(3.4) von der Auflagefläche (9.1,9.2) herabfallen.

2. Vorrichtung nach Anspruch 1, **dadurch gekennzeichnet, dass** das Transportband (7) im Obertrum des Sortier- und Steilförderteils (5.5) gegenüber der Horizontalen in einem Winkel von 70 - 90 ° geneigt ist.

3. Vorrichtung nach Anspruch 1 oder 2, **dadurch gekennzeichnet, dass** die Neigung des Transportbandes (7) im Obertrum zumindest in einem Abschnitt (5.6) des Sortier- und Steilförderteils (5.5) einstellbar ist.

4. Vorrichtung nach einem der Ansprüche 1 bis 3, **dadurch gekennzeichnet, dass** das Transportband (7) im Obertrum des Beladeteils (5.4) gegenüber der Horizontalen in einem Winkel von 0 - 45 ° geneigt ist.

5. Vorrichtung nach einem der Ansprüche 1 bis 4, **dadurch gekennzeichnet, dass** der Abstand zwischen den Profilleisten (9) in der stets gleichbleibenden Transportrichtung (6) derart bestimmt wird, dass die jeweils in Transportrichtung (6) vordere Auflagefläche (9.1,9.2) jeder Profilleiste (9) die Objekte (2,3) nur einreihig aufnehmen kann.

6. Vorrichtung nach einem der Ansprüche 1 bis 5, **dadurch gekennzeichnet, dass** die Oberfläche des Transportbands (7) derart eingerichtet ist, dass die Deck- oder Bodenfläche (3.1, 3.2) jedes Objekts (2,3) zumindest in dem Sortier- und Steilförderteil (5.5) flächig an der Oberfläche zur Anlage bringbar ist.

7. Vorrichtung nach einem der Ansprüche 1 bis 6, **dadurch gekennzeichnet, dass** das Transportband (7) wahlweise ein Gurtband, ein Riemen oder ein Gliederband ist.

8. Vorrichtung nach einem der Ansprüche 1 bis 7, **dadurch gekennzeichnet, dass** das Transportband (7) ein Verschlusselement zum Öffnen und Verschließen des Transportbandes (7) aufweist.

9. Vorrichtung nach einem der Ansprüche 1 bis 7, **dadurch gekennzeichnet, dass** die erste und zweite Auflagefläche (9.1, 9.2) jeder Profilleiste (9) an der dem Transportband (7) zugewandten Seite durch eine Fläche (9.3) und an der gegenüberliegenden Seite durch eine Übergangsfläche (9.4) miteinander verbunden sind, wobei die Übergangsfläche (9.4) aufgrund ihrer Geometrie ein Aufliegen von Objekten verhindert.

10. Vorrichtung nach Anspruch 9, **dadurch gekennzeichnet, dass** die Übergangsfläche (9.4) zumindest entlang der Kante (9.5) der weniger breiten Auflagefläche (9.2) als Fase (9.6), als Mulde oder als Einschnitt ausgebildet ist.

11. Vorrichtung nach Anspruch 9 oder 10, **dadurch gekennzeichnet, dass** die Übergangsfläche (9.4) als Überhöhung der Profilleiste (9) ausgebildet ist.

12. Vorrichtung nach einem der Ansprüche 1 bis 11, **dadurch gekennzeichnet, dass** jede Profilleiste (9) aus mehreren Teilen zusammengesetzt ist.

13. Vorrichtung nach einem der Ansprüche 1 bis 12, **dadurch gekennzeichnet, dass** jede Profilleiste (9) mittels Schraubverbindungen mit dem Transportband (7) verbunden ist.

14. Vorrichtung nach einem der Ansprüche 1 bis 13, **dadurch gekennzeichnet, dass** in der stets gleichbleibenden Transportrichtung (6) hinter dem Sortier- und Steilförderteil (5.5) eine Ausleiteinrichtung für die Objekte (2,3) angeordnet ist.

## Claims

1. A device (1) for sorting and transporting matching objects (2,3) with a lateral surface (3.3) extending between a bottom and top surface (3.1, 3.2), whose centre of gravity of volume does not coincide with its centre of mass (3.4), comprising
- a continuous conveyor (5) with a conveyor belt (7) rotating in an upper and lower run in a transport direction (6) which always stays the same, wherein the upper run of the conveyor belt (7) in the transport direction (6) which always stays the same firstly runs through a loading part (5.4) and then an upwardly conveying sorting and steep conveying part (5.5) of the continuous conveyor (5),
- several carriers configured as profile strips (9) for the objects (2,3), which are attached to the conveyor belt (7) transversely to the transport direction (6) which always stays the same, wherein
- each profile strip (9) has a first support surface (9.1) and a second support surface (9.2) opposite the first support surface (9.1), wherein the first and second support surfaces (9.1, 9.2) each have a length (L) extending in the longitudinal direction of the profile strip (9) and a different width (B1, B2) extending transversely thereto, **characterized in that**
- the conveyor belt (7) can optionally be used either in a first or second running direction (10, 11) in the continuous conveyor (5) in such a manner that in the first running direction (10) of the conveyor belt, the first support surface (9.1) and in the second running direction (11) of the conveyor belt (7) the second support surface (9.2) is the front support surface in the transport direction (6) which always stays the same,
- the width (B1, B2) of the optionally front first and second support surface (9.1, 9.2) in the transport direction (6) which always stays the same is matched to the objects (2,3) in such a manner that in the loading part (5.4) on the respectively front support surface (9.1, 9.2) of each profile strip (9) in the transport direction (6), which always stays the same, objects (2,3) with correct and incorrect orientation are picked up with the lateral surface (3.3) resting thereon, wherein the distance between the centre of mass (3.4) of each object (2,3) with correct orientation and the conveyor belt (7) is less than the distance between the centre of mass (3.4) of each object (2,3) with incorrect orientation and the conveyor belt (7) and in the subsequent sorting and steep conveying part (5.5) the objects (2,3) with incorrect orientation drop down due to the greater distance of the centre of mass (3.4) from the support surface (9.1, 9.2).

2. The device according to Claim 1, **characterized in that** the conveyor belt (7) in the upper run of the sorting and steep conveying part (5.5) is inclined at an angle of 70 - 90° with respect to the horizontal.

3. The device according to Claim 1 or 2, **characterized in that** the inclination of the conveyor belt (7) in the upper run is adjustable at least in a section (5.6) of the sorting and steep conveying part (5.5).

4. The device according to one of Claims 1 to 3, **characterized in that** the conveyor belt (7) in the upper run of the loading part (5.4) is inclined at an angle of 0 - 45° with respect to the horizontal.

5. The device according to one of Claims 1 to 4, **characterized in that** the distance between the profile strips (9) in the transport direction (6) which always stays the same is determined in such a manner that the respectively front support surface (9.1, 9.2) of each profile strip (9) in the transport direction (6) can only pick up the objects (2,3) in one row.

6. The device according to one of Claims 1 to 5, **characterized in that** the surface of the conveyor belt (7) is set up in such a manner that the top or bottom surface (3.1, 3.2) of each object (2,3) can be brought into contact flatly on the surface at least in the sorting and steep conveying part (5.5).

7. The device according to one of Claims 1 to 6, **characterized in that** the conveyor belt (7) is optionally a webbing, a belt or a link belt.

8. The device according to one of Claims 1 to 7, **characterized in that** the conveyor belt (7) has a closure element for opening and closing the conveyor belt (7).

9. The device according to one of Claims 1 to 7, **characterized in that** the first and second support surfaces (9.1, 9.2) of each profile strip (9) on the side facing the conveyor belt (7) are connected to one another by a surface (9.3) and on the opposite side by a transition surface (9.4), wherein the transition surface (9.4) prevents objects from resting thereon due to its geometry.

10. The device according to Claim 9, **characterized in that** the transition surface (9.4) is configured as a chamfer (9.6), as a trough or as an incision at least along the edge (9.5) of the less wide support surface (9.2).

11. The device according to Claim 9 or 10, **characterized in that** the transition surface (9.4) is configured as an elevation of the profile strip (9).

12. The device according to one of claims 1 to 11, **characterized in that** each profile strip (9) is composed of several parts.

13. The device according to one of Claims 1 to 12, **characterized in that** each profile strip (9) is connected to the conveyor belt (7) by means of screw connections.

14. The device according to one of Claims 1 to 13, **characterized in that** a discharge device for the objects (2,3) is arranged in the transport direction (6), which always stays the same, behind the sorting and steep conveying part (5.5).

## Revendications

1. Dispositif (1), destiné à trier et à transporter des objets (2,3) concordants, avec une surface d'enveloppe (3.3) s'étendant entre une surface de fond inférieur et de recouvrement (3.1, 3.2), dont le centre de gravité volumique ne coïncide pas avec le centre de gravité massique (3.4), comprenant
- un convoyeur continu (5), pourvu d'une bande de transport (7) en circulation dans une direction de transport (6) toujours constante dans un brin supérieur et inférieur, le brin supérieur de la bande de transport (7) traversant dans la direction de transport (6) toujours constante d'abord une partie de chargement (5.4) et ensuite une partie de tri et de convoyage à forte pente (5.5) du convoyeur continu (5),
- plusieurs entraîneurs conçus sous la forme de baguettes profilées (9) pour les objets (2,3), qui sont fixés sur la bande de transport (7), à la transversale de la direction de transport (6) toujours constante,
- chaque baguette profilée (9) comportant une première surface de dépose (9.1) et une deuxième surface de dépose (9.2), placée au vis-à-vis de la première surface de dépose (9.1), la première et la deuxième surfaces de dépose (9.1, 9.2) présentant chacune une longueur (L) s'étendant dans la direction longitudinale de la baguette profilée (9) et une largeur (B1, B2) différente, s'étendant transversalement à celle-ci, **caractérisé en ce que**
- la bande de transport (7) est utilisable sélectivement dans une première ou une deuxième direction de déplacement (10, 11) dans le convoyeur continu (5), de telle sorte que dans la première direction de déplacement (10) de la bande de transport, la première surface de dépose (9.1) et dans la deuxième direction de déplacement (11) de la bande de transport (7), la deuxième surface de dépose (9.2) soit la surface de dépose antérieure dans la direction de transport (6) toujours constante,
- la largeur (B1, B2) de la première et de la deuxième surface de dépose (9.1, 9.2) sélectivement antérieure dans la direction de transport (6) toujours constante étant adaptée aux objets (2,3), de telle sorte que dans la partie de chargement (5.4), sur la surface de dépose (9.1, 9.2) respectivement antérieure dans la direction de transport (6) toujours constante de chaque baguette profilée (9), des objets (2,3) présentant une orientation correcte et erronée soient réceptionnés en reposant par la surface d'enveloppe (3.3), l'écart entre le centre de gravité massique (3.4) de chaque objet (2,3) présentant une orientation correcte et la bande de transport (7) étant inférieur à l'écart entre le centre de gravité massique (3.4) de chaque objet (2,3) présentant une orientation erronée et la bande de transport (7) et dans la partie de tri et de convoyage à forte pente (5.5) qui s'y raccorde, les objets (2,3) présentant une orientation erronée chutant de la surface de dépose (9.1, 9.2) en raison de l'écart plus élevé du centre de gravité massique (3.4).

2. Dispositif selon la revendication 1, **caractérisé en ce que** dans le brin supérieur de la partie de tri et de convoyage à forte pente (5.5), la bande de transport (7) est inclinée d'un angle de 70 à 90 ° par rapport à l'horizontale.

3. Dispositif selon la revendication 1 ou 2, **caractérisé en ce que** l'inclinaison de la bande de transport (7) est réglable dans le brin supérieur, au moins dans un segment (5.6) de la partie de tri et de convoyage à forte pente (5.5).

4. Dispositif selon l'une quelconque des revendications 1 à 3, **caractérisé en ce que** dans le brin supérieur de la partie de chargement (5.4), la bande de transport (7) est inclinée d'un angle de 0 à 45 ° par rapport à l'horizontale.

5. Dispositif selon l'une quelconque des revendications 1 à 4, **caractérisé en ce que** l'écart entre les baguettes profilées (9) dans la direction de transport (6) toujours constante est déterminé de telle sorte que la surface de dépose (9.1, 9.2) respectivement antérieure dans la direction de transport (6) de chaque baguette profilée (9) ne puisse réceptionner les objets (2,3) que sur une rangée.

6. Dispositif selon l'une quelconque des revendications 1 à 5, **caractérisé en ce que** la surface de la bande de transport (7) est configurée de telle sorte qu'au moins dans la partie de tri et de convoyage à forte pente (5.5), la surface de recouvrement ou de fond inférieur (3.1, 3.2) de chaque objet (2,3) puisse être amenée en appui à plat sur la surface.

7. Dispositif selon l'une quelconque des revendications 1 à 6, **caractérisé en ce que** la bande de transport (7) est sélectivement une sangle, une courroie ou une bande articulée.

8. Dispositif selon l'une quelconque des revendications 1 à 7, **caractérisé en ce que** la bande de transport (7) comporte un élément de fermeture, destiné à ouvrir et à fermer la bande de transport (7).

9. Dispositif selon l'une quelconque des revendications 1 à 7, **caractérisé en ce que**, sur la face dirigée vers la bande de transport (7), la première et la deuxième surfaces de dépose (9.1, 9.2) de chaque baguette profilée (9) sont reliées l'une à l'autre par une surface (9.3) et sur la face en vis-à-vis par une surface de transition (9.4), en raison de sa géométrie, la surface de transition (9.4) empêchant que des objets y reposent.

10. Dispositif selon la revendication 9, **caractérisé en ce qu'**au moins le long de l'arête (9.5) de la surface de dépose (9.2) moins large, la surface de transition (9.4) est conçue sous la forme de chanfrein (9.6), de cuvette ou d'entaille.

11. Dispositif selon la revendication 9 ou 10, **caractérisé en ce que** la surface de transition (9.4) est conçue sous la forme d'une surélévation de la baguette profilée (9).

12. Dispositif selon l'une quelconque des revendications 1 à 11, **caractérisé en ce que** chaque baguette profilée (9) est composée de plusieurs parties.

13. Dispositif selon l'une quelconque des revendications 1 à 12, **caractérisé en ce que** chaque baguette profilée (9) est reliée avec la bande de transport (7) au moyen d'assemblages vissés.

14. Dispositif selon l'une quelconque des revendications 1 à 13, **caractérisé en ce que** dans la direction de transport (6) toujours constante, à l'arrière de la partie de tri et de convoyage à forte pente (5.5), est placé un système d'évacuation pour les objets (2,3).
